# EUROPEAN PATENT APPLICATION

(11) **EP 4 656 871 A1**
(43) Date of publication of application: **03.12.2025**
(21) Application number: 24178438.8
(22) Date of filing: 28.05.2024
(51) Int. Cl.: F03D 1/06

(54) **A WIND TURBINE ROTOR BLADE**

(71) Applicant: Nordex Energy SE & Co. KG, 22419 Hamburg (DE)
(72) Inventor: Block, Tim Berend, 22419 Hamburg (DE); Redl, Christoph, 22419 Hamburg (DE)
(74) Representative: Hauck Patent- und Rechtsanwälte PartmbB

(57) **Abstract**

A wind turbine rotor blade comprising
• a blade root,
• a blade tip,
• a blade length,
• a tip section including the blade tip and extending over 5 % of the blade length or less,
• a main section extending over 50 % of the blade length or more and ending at the tip section, and
• a cross section having, at each position along the blade length,
- a chord and
- a maximum thickness at a maximum thickness chord position,

• wherein the wind turbine rotor blade is designed to be operated with variable pitch angle, a design pitch angle being the angle at which the wind turbine rotor at a design tip speed ratio extracts maximum power from the wind,
• wherein in a projection onto the rotor plane of the wind turbine rotor blade arranged at the design pitch angle, the maximum thickness chord position throughout the main section is offset from the pitch axis towards the leading edge.

## Description

The invention relates to a wind turbine rotor blade with a blade root defining a pitch axis, a blade tip, a leading edge, a trailing edge, a tip section including the blade tip, and a main section extending over 50 % of the blade length or more and ending at the tip section. A cross section of the wind turbine rotor blade has at each position along the blade length, a chord connecting the leading edge and the trailing edge and a maximum thickness at a maximum thickness chord position.

DE 10 2005 034 078 B4 discloses wind turbine rotor blades having a curved elastic axis. An outboard section of the wind turbine rotor blade has a rearward sweep which leads to a pitching moment at the blade root. To compensate for this pitching moment, an inboard section of the wind turbine rotor blade is provided with a forward sweep.

US 2014/02005452 A1 discloses a wind turbine rotor blade having an aft-swept tip portion and a straight portion between a blade root and the aft-swept portion. An elastic axis of the straight portion is aligned with the pitch axis, and a centre of pressure of the straight portion is spaced from the pitch axis in a forward direction. This design shall reduce twist-induced torque experienced at the pitch control actuator.

EP 3 712 424 A1 discloses a wind turbine rotor blade having a blade tip section with a sweep and a load carrying structure comprising a first longitudinal support structure aligned with the blade's longitudinal axis and a second longitudinal support structure arranged at an angle.

WO 2022/117371 A1 discloses a wind turbine rotor blade having an inboard part in which a double curved geometry is avoided to improve the structural performance of the inboard part.

EP 2 129 907 B1 discloses a wind turbine rotor blade having a shoulder section with constant chord.

EP 2 682 602 B1 discloses a wind turbine rotor blade having a modified tip section. A maximum thickness chord position of the aerodynamic profiles near the blade tip is shifted towards the leading edge. A maximum-blade-thickness line formed by connecting the maximum thickness chord positions is formed as a straight line by shifting the aerodynamic profiles towards the trailing edge. The leading edge in the tip section is S-shaped.

Departing therefrom, it is an object of the invention to provide a wind turbine rotor blade with improved structural performance and easier handling.

This object is solved by the wind turbine rotor blade with the features of claim 1. Preferred aspects of the invention are given in the dependent claims.

The wind turbine rotor blade has
- a blade root having a blade root diameter and defining a pitch axis,
- a blade tip,
- a blade length measured from the blade root to the blade tip,
- a leading edge,
- a trailing edge,
- a tip section including the blade tip and extending over 5 % of the blade length or less,
- a main section extending over 50 % of the blade length or more and ending at the tip section, and
- a cross section having, at each position along the blade length,
   - a chord connecting the leading edge and the trailing edge and
   - a maximum thickness at a maximum thickness chord position,
- wherein the wind turbine rotor blade is designed to be mounted to a wind turbine rotor hub for rotation about a rotor axis such that the pitch axis defines a rotor plane, and to be operated with variable pitch angle, wherein a design pitch angle is defined as the pitch angle at which the wind turbine rotor at a design tip speed ratio extracts maximum power from the wind,
- wherein in a projection onto the rotor plane of the wind turbine rotor blade arranged at the design pitch angle, the maximum thickness chord position throughout the main section is offset from the pitch axis towards the leading edge by a main section offset.

The wind turbine rotor blade is designed for a wind turbine having a rotor with an essentially horizontal axis. The wind turbine may be operated at variable rotor speed and at varying pitch angles. To this end, the wind turbine rotor may comprise one or more of the wind turbine rotor blades mounted to a rotor hub via a pitch bearing, so that the pitch angle can be controlled with a pitch drive. Typically, the wind turbine rotor will have two or three wind turbine rotor blades.

The wind turbine rotor blade has a blade root adapted for being mounted to a wind turbine rotor hub, for example by a bolted connection to a pitch bearing. For this reason, the blade root defines a pitch axis generally corresponding to a longitudinal axis of the wind turbine rotor blade. The blade root may have a circular cross-section.

The wind turbine rotor blade has main section extending over 50 % of the blade length or more, such as for example over 60 % or more, over 70 % or more, or even 80 % or more. The main section in any case extends in the direction towards the blade tip up to the tip section, that is at least up to a longitudinal position of 95 % of the blade length, measured from the blade root.

The wind turbine rotor blade is designed to be mounted to a wind turbine rotor hub so that in operation, the wind turbine rotor blade rotates about the rotor axis, and the blade tip describes a circle. The rotary motion of the pitch axis defines a rotor plane. The rotor plane may be flat or may correspond to a cone when the angle between the pitch axis and the rotor axis deviates from 90°. We note the wind turbine rotor blade and particularly the blade tip do not need to be lying in the rotor plane, for example when the wind turbine rotor blade comprises a pre-bend or when it is deformed under load.

When the wind turbine rotor rotates about the rotor axis with its design tip speed ratio, the design pitch angle is the pitch angle at which the wind turbine rotor extracts maximum power from the wind. The design pitch angle is determined in the design phase of the wind turbine rotor blade and is often indicated with reference to a 0°-marker at the blade root. When the pitch angle is set to the design pitch angle, a chord near the blade tip is arranged approximately parallel to the rotor plane. The tip speed ratio is the ratio between the velocity of the blade tip and the wind velocity in operation. In a partial load range, when it is desired to extract maximum power from the wind, the rotor is controlled to rotate at its design tip speed ratio, which typically is about 10 m/s, and the pitch angle is set to the design pitch angle.

In order to further describe the geometry of the wind turbine rotor blade, reference is made to a (parallel and orthogonal) projection of the wind turbine rotor blade onto the rotor plane when the wind turbine rotor blade is mounted to a rotor hub and is set to the design pitch angle. This projection corresponds to a view of the wind turbine rotor blade seen in the direction of the rotor axis (it corresponds to this view exactly as long as the pitch axis is perpendicular to the rotor axis, otherwise it corresponds approximately). In the projection, a pre-bend of the wind turbine rotor blade, which is usually directed out of the rotor plane, is not visible. Another concept to illustrate the appearance of the wind turbine rotor blade in the projection is to imagine a deformation of the wind turbine rotor blade under load leading to the wind turbine rotor blade being arranged in the rotor plane.

The wind turbine rotor blade may be provided in one part extending from the blade root to the blade tip. In the alternative, the wind turbine rotor blade may be provided in any number of longitudinal segments assembled to form the entire wind turbine rotor blade by connecting adjacent longitudinal segments with one another. The wind turbine rotor blade or the respective longitudinal segments may themselves be manufactured by connecting any number of wind turbine rotor blade shell members, such as first and second half shells. The blade length of the wind turbine rotor blade is measured from the blade root to the blade tip. The blade length may be 60 m or more, for example.

In accordance with the invention, within the entire main section, the maximum thickness chord position is offset from the pitch axis (always seen in the projection of the wind turbine rotor blade onto the rotor plane) towards the leading edge by a main section offset. This is different from standard wind turbine rotor blades, because for structural reasons, it is generally desired to use the maximum available height within the aerodynamic profile for a load carrying structure (such as a main spar and/or two main spar caps) which is aligned with the pitch axis, so that the maximum thickness chord positions are aligned with the pitch axis. On the other hand, the aerodynamic profiles typically require their maximum thickness position to be at about one quarter of the chordwise length, while the circular blade root has its maximum thickness at one half of the chordwise length. The standard design therefore leads to a shift of the blade geometry towards the trailing edge. The inventors realized that this leads to several disadvantages of the standard design.

First, the shift of the blade geometry towards the trailing edge leads to a corresponding shift of the center of gravity of the wind turbine rotor blade towards the trailing edge relative to the pitch axis. The shift of the center of gravity may account to for example as much as 400 mm, making it difficult to handle the rotor blade during manufacture, transportation and installation because large occurs when the wind turbine rotor blade is held at the blade root.

Second, the shift of geometry towards the trailing edge also leads to a shift of the aerodynamic forces. In operation, these forces may also lead to substantial torque about the pitch axis and therefore require a strong pitch system.

Third, flapwise bending loads may lead to an undesirable bend-twist coupling.

Fourth, the shift of the wind turbine rotor blade geometry leads to a relatively strong curvature of the trailing edge, in particular between the blade root and the longitudinal position with maximum chord. This curvature is structurally demanding. Further, positioning of the materials for the wind turbine rotor blade in a mold near the trailing edge during manufacture may be a difficult task.

The main section offset of the invention mitigates these disadvantages. The aerodynamic profiles in the main section, in particular their maximum thickness chord position, is shifted with reference to the described standard wind turbine rotor blade towards the leading edge in the entire main section. Due to this shift, the center of gravity of the wind turbine rotor blade is also shifted towards the leading edge, so that it can be kept relatively close to the pitch axis. The aerodynamic forces acting on the main section are shifted towards the leading edge as well, so that less torque is accumulated at the blade root. Further, due to the main section offset, less curvature is required at the trailing edge.

Arranging the center of gravity closer to the pitch axis is advantageous for transport and lifting operations of the wind turbine rotor blade, leading to a lower risk of slippage and less blade torsional loads on the transport frames, so that handling of the wind turbine rotor blade is simplified and less sophisticated transportation tools are needed, allowing for cost savings.

In an aspect, the main section offset is in a range of 3 % to 30 % of the blade root diameter, particular in a range of 5 % to 25 % of the blade root diameter. A main section offset in this range is efficient with regard to the shift of the center of gravity as well as with regard to the shift of the aerodynamic forces. At the same time, it is still possible to provide an efficient load carrying structure based on known techniques.

In an aspect, the main section offset is constant throughout the main section or varies by less than 2 % of the blade root diameter. In other words, throughout the main section, the maximum thickness chord positions are essentially placed along a straight line which is, still seen in the projection onto the rotor plane, arranged in parallel to the pitch axis. When starting from a standard wind turbine rotor blade, this can be obtained simply by shifting the entire main section towards the leading edge, while maintaining the geometry of the main section itself. The aerodynamic performance of the main section in this approach will essentially be maintained as well.

In an aspect, in the projection, the maximum thickness chord position throughout the tip section is offset from the pitch axis towards the leading edge by a tip section offset. In this aspect, the tip section with reference to a standard rotor blade is offset towards the leading edge as well, similar to the approach explained above with reference to the main section. This shifting of the tip section contributes to the advantages of the main section offset explained above. Further, the main section and the tip section can form a relatively straight unit, similar to a standard wind turbine rotor blade.

In an aspect, the tip section offset is in a range of 3 % to 30 % of the blade root diameter, in particular in a range of 5 % to 25 % of the blade root diameter. In another aspect, the tip section offset is constant throughout the tip section or varies by less than 2 % of the blade root diameter. In particular, the tip section offset may be the same as the main section offset. As has been explained above with reference to the main section, the tip section may be straight, in particular each maximum thickness chord position within the tip section may be arranged on a straight line, in particular in parallel to the pitch axis (when seen in the projection onto the rotor plane). In this case, the wind turbine rotor blade does not have a sweep, neither a forward sweep nor a rearward sweep.

In an aspect, the main section extends in the direction towards the blade root at least up to a longitudinal position of maximum chord. Such a long main section, reaching relatively closely to the blade root, is particularly efficient in shifting the blade geometry towards the leading edge and also in reducing the curvature of the trailing edge.

In an aspect, the wind turbine rotor blade has a transition section arranged between the blade root and the main section, wherein in the projection, the maximum thickness chord position in the transition section is offset from the pitch axis towards the leading edge by a transition section offset which increases in the direction from the blade root towards the main section. In particular, the transition section offset may be 0 at the blade root side of the transition section and may increase within the transition section to the main section offset at the blade root side end of the main section. The transition section forms a smooth transition between the blade root and the main section.

In an aspect, the transition section offset increases linearly or along a smooth curve. The smooth curve in particular may have an S-shape. In particular with an S-shaped curve, but also with a linear or otherwise curved, smooth transition, a structurally efficient transition is obtained. With a linear transition, it may be easiest to provide a simple load carrying structure.

In an aspect, the wind turbine rotor blade has a blade root section with a circular cross section extending from the blade root towards the transition section. The blade root section may be tubular or conical. In this aspect, the geometrical shift towards the leading edge begins only at the outer end of the blade root section. This allows for a simple yet efficient root section design.

In an aspect, in the projection, the leading edge in an inner part of the main section and/or in a part of the transition section is arranged in a distance from the pitch axis larger than 50% of the blade root diameter, in particular larger than 55% of the blade root diameter. In particular, the leading edge in the specified section may include a convex curvature, while in an inner part of the transition section, the leading edge may include a concave curvature. The specific arrangement of the leading edge results from the main section offset and/or from the transition section offset and goes hand-in-hand with the less pronounced curvature at the trailing edge.

In an aspect, the wind turbine rotor blade has a center of gravity which is, in the projection, offset from the pitch axis towards the trailing edge by 20 % of the blade root diameter or less, in particular by 15 % or less. The distance of the center of gravity from the pitch axis (still seen in the projection onto the rotor plane) is smaller than in a standard wind turbine rotor blade. From a handling point of view, it may be ideal to select the main section offset and/or the tip section offset and/or the transition section offset such that the center of gravity in the projection is positioned exactly on the pitch axis. However, a certain distance is acceptable and may lead to a better compromise between the desired effects of the shift of the blade geometry towards the leading edge and more complex requirements as to the load carrying structure.

In an aspect, the wind turbine rotor blade has two main spar caps, each main spar cap having a midline, the midlines of both main spar caps being arranged in a plane parallel to the pitch axis and offset from the pitch axis towards the leading edge by a spar cap offset. In particular, the spar cap offset can be the same as the main section offset. This means the main spar caps essentially follow the maximum thickness chord position in the main section. In this case, the load carrying structure formed by the two main spar caps benefits from the maximum structural height possible within the aerodynamic profiles. Closer to the blade root, the positions of the main spar caps may deviate from the maximum thickness chord position, but due to the relatively large profile height close to the blade root this may be acceptable. If desired, additional stiffening material may be provided near the blade root to supplement the stiffness provided by the main spar caps.

The invention can also be described by the following combination of features:
A wind turbine rotor having a wind turbine rotor hub defining a rotor axis, and at least one wind turbine rotor blade mounted to the wind turbine rotor hub for rotation about the rotor axis such that a pitch axis of the least one rotor blade defines a rotor plane, wherein the at least one wind turbine rotor blade comprises
- a blade root having a blade root diameter and defining the pitch axis,
- a blade tip,
- a blade length measured from the blade root to the blade tip,
- a leading edge,
- a trailing edge,
- a tip section including the blade tip and extending over 5 % of the blade length or less,
- a main section extending over 50 % of the blade length or more and ending at the tip section, and
- a cross section having, at each position along the blade length,
   - a chord connecting the leading edge and the trailing edge and
   - a maximum thickness at a maximum thickness chord position,
- wherein the at least one wind turbine rotor blade is designed to be operated with variable pitch angle, wherein a design pitch angle is defined as the pitch angle at which the wind turbine rotor at a design tip speed ratio extracts maximum power from the wind,
- wherein in a projection onto the rotor plane of the wind turbine rotor blade arranged at the design pitch angle, the maximum thickness chord position throughout the main section is offset from the pitch axis towards the leading edge by a main section offset.

The at least one wind turbine rotor blade of this wind turbine rotor can be designed in accordance with any of the features explained above with reference to the wind turbine rotor blade.

In the following, the invention is explained in greater detail based on drawings. The drawings show:
- Fig. 1: a schematic view of a wind turbine in a view onto the rotor plane,
- Fig. 2: a rotor blade seen in cross section, and
- Fig. 3: a projection of a wind turbine rotor blade onto a rotor plane.

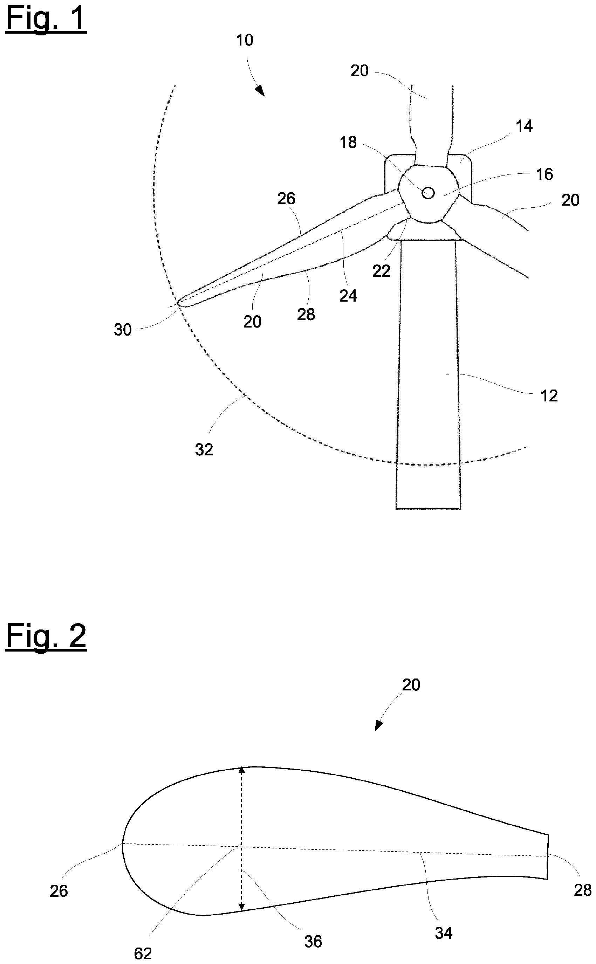

The wind turbine 10 of Fig. 1 has a wind turbine tower 12, a nacelle 14, and a wind turbine rotor comprising a wind turbine rotor hub 16 defining a rotor axis 18, which is arranged approximately horizontally and perpendicular to the drawing plane, and three wind turbine rotor blades 20. Each wind turbine rotor blade 20 has a blade root 22 defining a pitch axis 24, a leading edge 26, a trailing edge 28 and a blade tip 30. When the wind turbine rotor rotates about the rotor axis 18, the pitch axis 24 defines a rotor plane 32. The wind turbine rotor blade 10 is mounted to the wind turbine rotor hub 16 and set at a design pitch angle.

Fig. 2 shows one of the wind turbine rotor blades 20 of Fig. 1 in cross section. The cross section corresponds to an aerodynamic profile. The leading edge 26 and trailing edge 28 are connected by a chord 34. At a maximum thickness chord position 62 on the chord 34, the cross section has its maximum thickness 36.

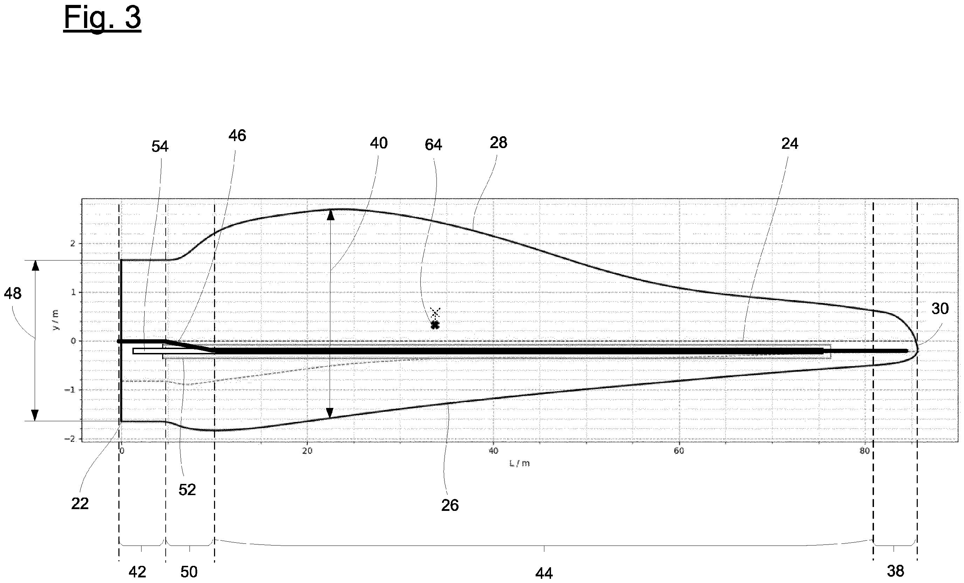

Fig. 3 shows a wind turbine rotor blade 20 in a projection onto the rotor plane 32. The blade root 22 is arranged to the left of Fig. 3 and defines a pitch axis 24. A tip section 38 of the wind turbine rotor blade 20 includes the blade tip 30 and extends over the outermost 5% of the wind turbine rotor blade 20. The longitudinal position where the wind turbine rotor blade 20 has its maximum chord 40 is indicated by a double arrow.

The wind turbine rotor blade also includes a blade root section 42 which extends from the blade root 22 to about 3 % to 5 % of the blade length. A main section 44 of the wind turbine rotor blade 20 begins at a longitudinal position of about 10% of the blade length, inboard of the longitudinal position with the maximum chord 40. This main section 44 extends over about 75% of the blade length.

Along the entire blade length, a position where the cross section of the wind turbine rotor blade 20 has its maximum thickness chord position 62 is indicated by a line 46. In the main section 44 as well as in the tip section 38, this line 46 is offset from the pitch axis 24 by about 10% of the blade root diameter 48, in a direction towards the leading edge 26. In the blade root section 42, which has a cylindrical cross-section, the maximum thickness chord position 62 (line 46) is arranged on the pitch axis 24 (always seen in the projection onto the rotor plane 32).

In a transition section 50 located between the blade root section 42 and the main section 44, the offset of the maximum thickness chord position 62 towards the leading edge 26 increases linearly from 0 to the main section offset.

The wind turbine rotor blade 20 has a leading edge 26 and a trailing edge 28. In a longitudinal section comprising the majority of the transition section 50 as well as an inner part of the main section 44, the leading edge 26 is arranged in a distance from the pitch axis 24 larger than 50% of the blade root diameter 48. In this longitudinal section, the leading edge 26 first (when seen from the blade root 22) comprises a concave curvature, followed by a convex curvature.

The position of a load carrying structure of the wind turbine rotor blade 20 is also illustrated. Each blade shell comprises a main spar cap 52 having a midline. The midlines are arranged in a plane parallel to the pitch axis 24 and offset therefrom by the main section offset. A main shear web 54 is also indicated. It follows the line 46 of the maximum thickness chord position on the main spar cap 52 in the main section 44. The center of gravity 64 is shifted to a position closer to the leading edge 26, shown by the dashed line.

### List of reference numerals

- 10: wind turbine
- 12: wind turbine tower
- 14: nacelle
- 16: wind turbine rotor hub
- 18: rotor axis
- 20: wind turbine rotor blade
- 22: blade root
- 24: pitch axis
- 26: leading edge
- 28: trailing edge
- 30: blade tip
- 32: rotor plane
- 34: chord
- 36: maximum thickness
- 38: tip section
- 40: maximum chord
- 42: blade root section
- 44: main section
- 46: line (maximum thickness chord position)
- 48: blade root diameter
- 50: transition section
- 52: main spar cap
- 54: main shear web
- 62: maximum thickness chord position
- 64: center of gravity

## Claims

1. A wind turbine rotor blade (10) comprising
• a blade root (22) having a blade root diameter (48) and defining a pitch axis (24),
• a blade tip (30),
• a blade length measured from the blade root (22) to the blade tip (30),
• a leading edge (26),
• a trailing edge (28),
• a tip section (38) including the blade tip (30) and extending over 5 % of the blade length or less,
• a main section (44) extending over 50 % of the blade length or more and ending at the tip section (38), and
• a cross section having, at each position along the blade length,
- a chord (34) connecting the leading edge (26) and the trailing edge (28) and
- a maximum thickness (36) at a maximum thickness chord position (62),
• wherein the wind turbine rotor blade (10) is designed to be mounted to a wind turbine rotor hub (16) for rotation about a rotor axis (18) such that the pitch axis (24) defines a rotor plane (32), and to be operated with variable pitch angle, wherein a design pitch angle is defined as the pitch angle at which the wind turbine rotor at a design tip speed ratio extracts maximum power from the wind,
• **characterized in that** in a projection onto the rotor plane (32) of the wind turbine rotor blade (10) arranged at the design pitch angle, the maximum thickness chord position (62) throughout the main section (44) is offset from the pitch axis (24) towards the leading edge (26) by a main section offset.

2. The wind turbine rotor blade (10) of claim 1, wherein the main section offset is in a range of 3 % to 30 % of the blade root diameter (48), in particular in a range of 5 % to 25 % of the blade root diameter (48).

3. The wind turbine rotor blade (10) of claim 1 or 2, wherein the main section offset is constant throughout the main section (44) or varies by less than 2 % of the blade root diameter (48).

4. The wind turbine rotor blade (10) of any of the claims 1 to 3, wherein in the projection, the maximum thickness chord position (62) throughout the tip section (38) is offset from the pitch axis (24) towards the leading edge (26) by a tip section offset.

5. The wind turbine rotor blade (10) of claim 4, wherein the tip section offset is in a range of 3 % to 30 % of the blade root diameter (48), in particular in a range of 5 % to 25 % of the blade root diameter (48).

6. The wind turbine rotor blade (10) of claim 4 or 5, wherein the tip section offset is constant throughout the tip section (38) or varies by less than 2 % of the blade root diameter (48).

7. The wind turbine rotor blade (10) of any of the claims 1 to 5, wherein the main section (44) extends in the direction towards the blade root (22) at least up to a longitudinal position of maximum chord (40).

8. The wind turbine rotor blade (10) of any of the claims 1 to 7, wherein the wind turbine rotor blade (10) has a transition section (50) arranged between the blade root (22) and the main section (44), wherein in the projection, the maximum thickness chord position (62) in the transition section (50) is offset from the pitch axis (24) towards the leading edge (26) by a transition section offset which increases in the direction from the blade root (22) towards the main section.

9. The wind turbine rotor blade (10) of claim 8, wherein the transition section offset increases linearly or along a smooth curve.

10. The wind turbine rotor blade (10) of any of the claims 1 to 9, wherein the wind turbine rotor blade (10) has a blade root section (42) with a circular cross section extending from the blade root (22) towards the transition section (50).

11. The wind turbine rotor blade (10) of any of the claims 1 to 10, wherein in the projection, the leading edge (26) in the main section (44) and/or in a part of the transition section (50) is arranged in a distance from the pitch axis (24) larger than 50 % of the blade root diameter (48), in particular larger than 55 % of the blade root diameter (48).

12. The wind turbine rotor blade (10) of any of the claims 1 to 11, wherein the wind turbine rotor blade (10) has a centre of gravity which is, in the projection, offset from the pitch axis (24) towards the trailing edge by 20% of the blade root diameter (48) or less, in particular by 15 % of the blade root diameter (48) or less.

13. The wind turbine rotor blade (10) of any of the claims 1 to 12, wherein the wind turbine rotor blade (10) has two main spar caps (52), each main spar cap (52) having a midline, the midlines of both main spar caps (52) being arranged in a plane parallel to the pitch axis (24) and offset from the pitch axis (24) towards the leading edge (26) by a spar cap offset, wherein in particular the spar cap offset is the same as the main section offset.
